# FASCICULE DE BREVET EUROPEEN

(11) **EP 1 949 482 B1**
(45) Date de publication et mention de la délivrance du brevet: **23.06.2010**
(21) Numéro de dépôt: 06820301.7
(22) Date de dépôt: 17.10.2006
(51) Int. Cl.: H01M 8/04

(54) **INSTALLATION CONSOMMATRICE D'ENERGIE ELECTRIQUE UTILISANT UNE PILE A COMBUSTIBLE ET PROCEDE D'ALIMENTATION D'UNE TELLE INSTALLATION**
STROMVERBRAUCHENDE INSTALLATION MIT EINER BRENNSTOFFZELLE UND VERFAHREN ZUR HERSTELLUNG EINER SOLCHEN INSTALLATION
ELECTRICAL POWER CONSUMING INSTALLATION USING A FUEL CELL AND METHOD OF SUPPLYING ONE SUCH INSTALLATION

(30) Priorité: 10.11.2005 FR 0553420
(43) Date de publication de la demande: 30.07.2008
(73) Titulaire: L'AIR LIQUIDE, Société Anonyme pour l'Etude et l'Exploitation des Procédés Georges Claude, 75007 Paris (FR)
(72) Inventeur: TOUVARD, Frédéric, F-38420 Revel (FR)
(74) Mandataire: De Cuenca, Emmanuel Jaime
(86) Numéro de dépôt international: PCT/FR2006/051042
(87) Numéro de publication internationale: WO 2007/057585

(56) Documents cités:
- WO-A-2005/018034
- WO-A-2006/038098
- US-A1- 2001 031 386
- US-A1- 2002 172 845
- US-A1- 2003 162 062
- PATENT ABSTRACTS OF JAPAN vol. 2000, no. 26, 1 juillet 2002 (2002-07-01) -& JP 2001 268721 A (HONDA MOTOR CO LTD), 28 septembre 2001 (2001-09-28)
- PATENT ABSTRACTS OF JAPAN vol. 2000, no. 15, 6 avril 2001 (2001-04-06) -& JP 2000 351602 A (JAPAN METALS & CHEM CO LTD; HONDA MOTOR CO LTD), 19 décembre 2000 (2000-12-19)

## Description

La présente invention concerne une installation fonctionnelle consommatrice d'énergie électrique utilisant une pile à combustible ainsi qu'un procédé pour alimenter en énergie une telle installation.

L'invention concerne plus particulièrement une installation fonctionnelle consommatrice d'énergie électrique utilisant une pile à combustible, comprenant un organe consommateur d'énergie électrique, une pile à combustible reliée à l'organe consommateur pour alimenter ce dernier en énergie électrique, la pile à combustible étant du type à combustible gazeux, notamment de l'hydrogène gazeux, une première réserve de combustible gazeux destinée à alimenter par défaut la pile.

Certaines installations consommatrices d'électricité sont alimentées par une pile à combustible produisant de l'électricité à partir d'hydrogène et d'air. L'utilisation d'une pile à combustible peut être préférée à d'autres sources d'énergies électriques (telles qu'un réseau électrique), notamment lorsque l'installation est trop éloignée d'un réseau électrique ou pour des raisons de sécurité ou d'intolérance à des pannes d'alimentation.

De telles installations concernent par exemple, des relais de télécommunication, des sites bancaires, des laboratoires ou des appareillages médicaux...

Pour produire de l'électricité, une pile à combustible doit être alimentée en combustible, par exemple de l'hydrogène gazeux.

Classiquement, dans les installations précitées, il est prévu une réserve de combustible pour alimenter la pile. Cependant, les installations connues sont peu satisfaisantes en ce qui concerne la gestion de la réserve d'alimentation en combustible de la pile. En effet, les installations connues peuvent être sujettes à des pannes d'alimentation de combustible (en cas de fuite notamment). Pour résoudre ce problème, une solution connue consiste à sur-dimensionner la réserve de combustible destinée à alimenter la pile. Cette solution n'est pas satisfaisante car elle nécessite d'immobiliser un volume important de combustible (en général plusieurs cadres de bouteilles sous pression). De plus, cette solution est quelquefois incompatible avec l'espace disponible pour la réserve de combustible.

Par ailleurs, pour estimer l'autonomie restante de la pile dans les installations connues, il est nécessaire de mesurer la pression dans la réserve avec des moyens qui doivent être compatibles avec les hautes pressions mesurées. Ces moyens de mesure sont en général croûteux. JP 2001268721 décrit une installation comprenant une pile à combustible avec deux réserves d'hydrogène. NO2005018034 décrit un procédé pour alimenter en energie électrique une installation avec une pile a combustible et deux réserves de combustible.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement **caractérisée en ce qu**'elle comporte une seconde réserve de combustible gazeux pour la pile, des moyens de distribution sélective de combustible à la pile à partir de la première ou de la seconde réserve, les moyens de distribution étant sensibles à un défaut d'alimentation ou à une alimentation insuffisante à partir de la première réserve et des moyens de commutation automatique la distribution de combustible à partir de la seconde réserve lors d'une telle alimentation insuffisante ou défectueuse de la première réserve et en ce que la première réserve de combustible gazeux est reliée à la pile au moyen d'une première ligne d'alimentation comprenant des premiers moyens de régulation de pression et/ou de détente à une première pression de détente, la seconde réserve de combustible gazeux est reliée à la pile au moyen d'une seconde ligne d'alimentation comprenant des seconds moyens de régulation de pression et/ou de détente à une seconde pression, distincte de la première pression.

Par ailleurs, l'invention peut comporter l'une ou plusieurs des caractéristiques suivantes :
- l'installation comporte des moyens de détection d'une alimentation insuffisante en combustible de la première réserve,
- l'organe consommateur, la pile à combustible et la seconde réserve sont disposés sensiblement dans un même contenant ou de façon sensiblement adjacente dans une première zone,
- la première réserve est éloignée relativement à l'ensemble comprenant l'organe consommateur, la pile à combustible et la seconde réserve,
- l'installation comprend des moyens de mesure ou d'estimation de la quantité de combustible gazeux consommé en temps réel par la pile, des moyens de traitement de données recevant des moyens de mesure ou d'estimation la quantité combustible consommé en temps réel par la pile et conformés pour calculer le moment d'un seuil de combustible insuffisant dans la première réserve, les moyens de traitement de données étant reliés aux moyens de distribution pour commander la commutation de la distribution de combustible de la première réserve à la seconde réserve lors lorsque le seuil de combustible est ou devient insuffisant dans la première réserve,
- les moyens de traitement de données comportent des moyens de stockage et de transmission de données apte à communiquer avec un système de surveillance d'un ensemble d'installations,
- l'installation comporte des moyens de détermination et/ou de saisie de la quantité initiale de combustible dans la première réserve
- l'installation comporte des moyens de détection de débit et/ou de pression à la sortie de la seconde réserve,
- l'installation comporte des moyens de mesure de la pression de gaz dans où à la sortie de la seconde réserve,
- la première réserve de combustible gazeux est reliée à la pile au moyen d'une première ligne d'alimentation comprenant des premiers moyens de régulation de pression et/ou de détente à une première pression de détente,
- la seconde réserve de combustible gazeux est reliée à la pile au moyen d'une seconde ligne d'alimentation comprenant des seconds moyens de régulation de pression et/ou de détente à une seconde pression,
- l'alimentation de la pile en combustible est réalisée par équilibrage de pression,
- les première et seconde lignes d'alimentation comportent des portions amont distinctes reliées respectivement à la première et à la seconde réserve et se rejoignent en une portion commune aval reliée à la pile, la première pression de détente étant supérieure à la seconde pression de détente, de façon à provoquer d'une part une alimentation de la pile par défaut à partir de la première réserve lorsque la pression de combustible dans la première réserve est supérieure à la première pression de détente, et d'autre part, une alimentation de la pile à partir de la seconde réserve lorsque la pression de combustible dans la première réserve est inférieure à la première pression de détente,
- la portion commune aval comporte des troisièmes moyens de régulation de pression et/ou de détente à une troisième pression de détente,
- le procédé comporte une étape de commutation de la distribution de combustible de la première réserve à la seconde réserve lorsque est déterminé un seuil de combustible insuffisant dans la première réserve.

Un autre but de l'invention est de proposer un procédé pour alimenter en énergie une telle installation fonctionnelle.

A cette fin le procédé d'alimentation concerne une installation fonctionnelle consommatrice d'énergie électrique utilisant une pile à combustible, comprenant un organe consommateur d'énergie électrique, une pile à combustible reliée à l'organe consommateur pour alimenter ce dernier en énergie électrique, la pile à combustible étant du type à combustible gazeux, notamment de l'hydrogène gazeux, une première et une seconde réserve de combustible gazeux aptes à alimenter la pile, le procédé comportant :
- une étape consistant à alimenter par défaut la pile à partir de la première réserve,
- une étape de détection ou de détermination d'une alimentation en combustible insuffisante ou défectueuse à partir de la première réserve,
- une étape de commutation de l'alimentation en combustible à partir de la seconde réserve lorsque l'alimentation en combustible à partir de la première réserve est susceptible d'être insuffisante ou est défectueuse, l'étape de détection
ou de détermination d'une alimentation en combustible insuffisante ou défectueuse comporte une détection d'un débit uniquement à la sortie de la seconde réserve.

Selon d'autres particularités :
- le procédé comporte une étape de détermination de la quantité initiale de combustible dans la première réserve, une étape de mesure ou d'estimation de la quantité de combustible consommée en temps réel par la pile, et une étape de détermination d'un seuil de combustible insuffisant atteint dans la première réserve en fonction de la quantité initiale de combustible et de la quantité de combustible consommée en temps réel,
- l'étape de détection ou de détermination d'une alimentation en combustible insuffisante ou défectueuse comporte une détection d'un débit à la sortie de la seconde réserve.

D'autres particularités et avantages apparaîtront à la lecture de la description ci-après, faite en référence aux figures dans lesquelles :
- la figure 1 représente une vue en perspective et schématique d'un exemple d'installation selon l'invention,
- la figure 2 représente une vue schématique illustrant la structure et le fonctionnement d'une installation du type de celle de la figure 1,
- la figure 3 représente un détail d'une l'installation du type de celles des figures 1 et 2 illustrant un exemple de structure d'une partie d'un circuit d'alimentation en combustible.

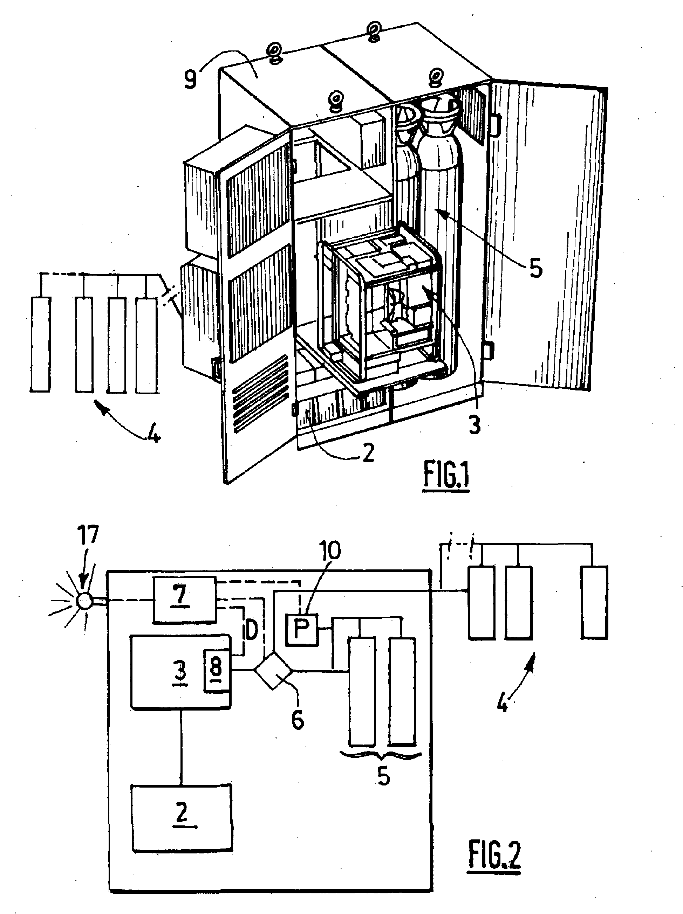

La figure 1 représente une armoire 9 contenant au moins un organe 2 consommateur d'énergie électrique, par exemple des dispositifs électroniques formant un relais ou une antenne de radiocommunication pour téléphone sans fil.

L'armoire contient au moins une pile à combustible 3 prévue pour assurer l'alimentation électrique de l'organe 2 consommateur. La pile à combustible 3 produit classiquement de l'électricité à partir d'hydrogène gazeux et d'air. Une telle pile à combustible est par exemple une pile du type PEM (« Proton Exchange Membrane »).

De préférence, la pile 3 est disposée de façon adjacente ou au moins proche de l'organe 2 consommateur. De cette façon, les raccordements entre la pile 3 et l'organe 2 peuvent être simplifiés et réduits. De plus, dans ce cas, en période froide, la chaleur générée par la pile 2 peut être utilisée pour réchauffer l'enceinte et les appareils froids.

La pile 3 est alimentée normalement (par défaut) par une première réserve 4 d'hydrogène gazeux stocké sous pression. Par exemple l'hydrogène est stocké dans la première réserve 4 à une pression d'au moins 10 bar. La première réserve 4 comporte, par exemple, une ou plusieurs bouteilles de gaz et de préférence au moins un cadre constitué d'une pluralité de bouteilles (schématisé à la figure 1).

De façon avantageuse, la première réserve 4 peut être disposée de façon relativement éloignée de l'armoire 9 contenant la pile 3 et l'organe 1 consommateur. Par exemple à quelques mètres de distance ou à plusieurs dizaines de mètres. En déportant de cette façon la première réserve 4, il est possible d'alimenter des piles 2 situées dans des zonés inadaptées pour accueillir une réserve 4 relativement volumineuse ainsi que des opérations de remplacement ou d'entretien des cadres 4 de bouteilles.

Selon l'invention, l'installation comprend également une seconde 5 réserve d'hydrogène gazeux disposée, de préférence, à proximité de la plie 3 et avantageusement également dans l'armoire 9. La seconde réserve 5 comprend par exemple au moins une bouteille ou réservoir d'hydrogène gazeux sous pression et de préférence plusieurs bouteilles.

La seconde réserve 5 constitue une réserve tampon destinée à assurer la continuité de l'alimentation de la pile 3 en hydrogène, en cas de défaillance de la première réserve 4. La seconde réserve 5 est par exemple dimensionnée pour permettre une autonomie d'alimentation suffisante pour permettre l'intervention d'une équipe de maintenance ou de distribution de gaz sous pression (par exemple de 24 à 48 heures). De préférence, la seconde réserve 5 a une capacité inférieure à la première réserve (et donc un volume inférieur). De préférence le rapport entre la quantité de combustible de la première réserve 4 et la quantité de combustible de la seconde réserve 5 est compris entre 1/3 et 1/100^{ième}.

La figure 2 représente de façon simplifiée l'installation selon l'invention.
Par soucis de concision, les éléments identiques à ceux décrits ci-dessus sont désignés par les mêmes références numériques et ne sont pas décrits en détail une seconde fois.

Selon l'invention, l'installation comprend des moyens 6 de distribution sélective de combustible à la pile 3 à partir de la première 4 ou de la seconde réserve 5. Ces moyens 6 de distribution sont de préférence sensibles à un défaut d'alimentation ou à une alimentation insuffisante à partir de la première réserve 4, pour commuter automatique la distribution de combustible à partir de la seconde réserve 5 lorsque la première réserve 4 fait ou va faire défaut.

Une telle architecture présente de nombreux avantages. En effet, plutôt que d'utiliser deux réserves de taille importante, dont l'une reste immobilisée à l'état plein pendant de longues périodes, la seconde réserve 5 permet de prévoir une réserve tampon plus réduite optimisant l'immobilisation de gaz sur le site de l'installation.

De préférence, l'installation est équipée de moyens 10 de mesure de la pression de gaz dans où à la sortie de la seconde réserve 5. Par exemple, un capteur de pression 10 relève la pression du gaz la sortie de la seconde réserve 5. Cette information et transmise avantageusement à des moyens 7 de traitement de données de l'installation. De préférence, ces moyens 7 de traitement de données comportent des moyens de stockage et de transmission 17 de données apte à communiquer avec un système connu de surveillance d'un ensemble de réservoirs ou d'installation. Par exemple une antenne 17 permet une communication sans fil des données de l'installation vers un système connu de centralisation et de télésurveillance de plusieurs installations analogues ou non (non représenté), en vue de gérer l'approvisionnement en gaz ou en vue d'opérations de maintenance.

Avantageusement, l'installation selon l'invention peut comporter des moyens 8 de mesure ou d'estimation de la quantité de combustible gazeux consommé en temps réel par la pile 3. Ces moyens 8 de mesure ou d'estimation peuvent être situés au niveau de la pile 3 elle-même, par exemple en surveillant la quantité d'électricité délivrée en temps réel par la pile 3 (l'électricité produite par la pile étant sensiblement proportionnelle à la quantité de combustible consommée).

Les moyens 7 de traitement de données (comprenant un calculateur ou analogue) sont reliés aux moyens 8 de mesure ou d'estimation et reçoivent l'information D concernant la quantité de combustible consommé en temps réel par la pile 3. Les moyens 7 de traitement de données peuvent calculer le moment d'un seuil de combustible insuffisant dans la première réserve 4. Par exemple, un seuil de combustible insuffisant peut être calculé par les moyens 7 de traitement de données à partir de la quantité initiale connue de combustible dans la première réserve 4. Cette quantité initiale peut être saisie lors de l'approvisionnement de l'installation (saisie ou renseignée automatiquement par des moyens supports d'information portés par les bouteilles par exemple).

Les moyens 7 de traitement de données peuvent également détecter une défaillance de l'installation, par exemple une fuite de combustible après sa sortie de la première réserve 4.

Dans ces situations, les moyens 7 de traitement de données commandent la commutation de la distribution de combustible de la première réserve 4 à la seconde réserve 5.

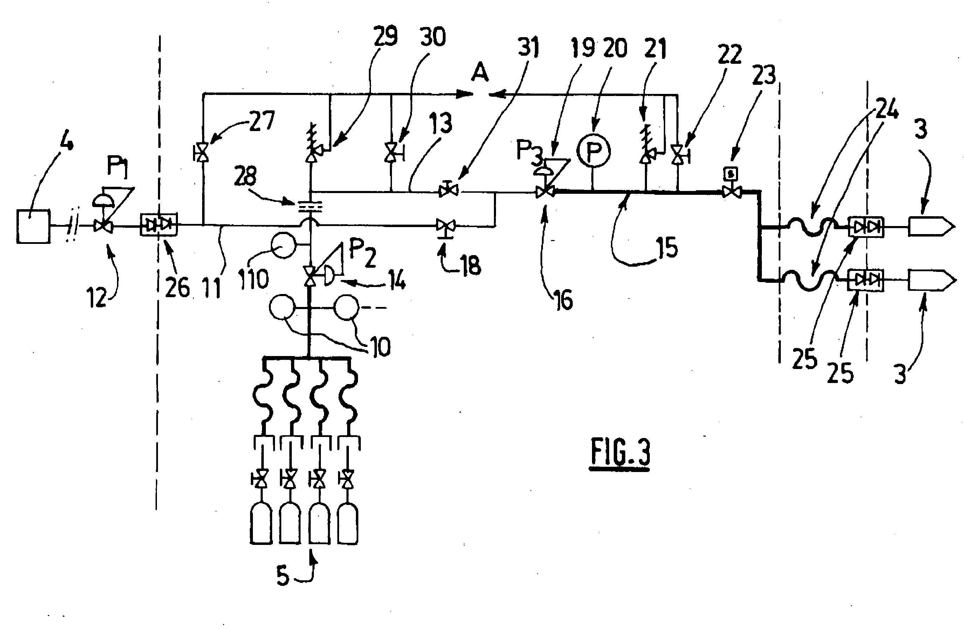

La figure 3 illustre plus précisément un exemple de réalisation de circuit de distribution de combustible entre les deux réserves 4, 5 et au moins une pile 3.

Par soucis de concision, les éléments identiques à ceux décrits ci-dessus sont désignés par les mêmes références numériques et ne sont pas décrits en détail une seconde fois.

La première réserve 4 de combustible gazeux est reliée à la pile 3 au moyen d'une première ligne 11 d'alimentation. La première ligne 11 d'alimentation comprend, d'amont en aval (c'est-à-dire de la réserve vers la pile 3), des premiers moyens 12 de régulation de pression et/ou de détente. Ces premiers 12 moyens, comportent, par exemple, une vanne de détente et sont conformés pour détendre le gaz à une première pression P1 de détente (par exemple 8 bar environ). La première ligne 11 comprend ensuite des moyens 26 formant clapet anti-retour et une dérivation vers l'atmosphère A commandée par une première vanne 27 de purge. En aval, la première ligne 11 comporte une vanne 18 de fermeture, par exemple manuelle. En aval, la première ligne 11 d'alimentation est formée par une portion aval 15 comprenant, d'amont en aval, détendeur aval 19, un capteur 20 de pression, une soupape de sécurité 21 vers l'atmosphère A, une vanne 22 de purge pouvant être reliée à l'atmosphère A et une vanne 23 de sécurité. En aval de la vanne 23 de sécurité, la portion aval 15 comprend deux conduits parallèles pourvus chacun d'un clapet anti-retour 25 et d'une extrémité de connexion à une pile 3 respective. En effet, la figure 3 illustre le fait que l'installation peut alimenter plus d'une pile 3 à combustible.

La seconde réserve 5 de combustible gazeux est reliée aux piles 3 au moyen d'une seconde ligne 13 d'alimentation. La seconde réserve 5 comprend, d'amont en aval (c'est-à-dire de la réserve vers les piles 3), des moyens 10 de mesure de pression du gaz à la sortie de la seconde réserve 5 et des seconds moyens 14 de régulation de pression et/ou de détente à une seconde pression P2. Les seconds moyens 14 de régulation de pression et/ou de détente comportent par exemple un détenteur de type connu.

Ces seconds 14 moyens de détente sont conformés pour détendre le gaz à une seconde pression P2 de détente inférieure à la première pression P1 de détente (par exemple 5 bar environ).

En aval ; la seconde ligne 13 d'alimentation comprend des moyens 10 de mesure de pression du gaz en aval du détendeur puis un orifice 28 calibré pour limiter le débit du gaz. En aval de l'orifice 28 calibré, la seconde ligne 13 d'alimentation comprend une soupape de sécurité 29 vers l'atmosphère A, une vanne 30 de purge vers l'atmosphère A et une vanne 31 de fermeture, par exemple manuelle. Après la vanne 31 de fermeture, la seconde ligne rejoint la portion aval 15. C'est-à-dire que la portion aval 15 reçoit le gaz issu des première 11 et seconde 13 lignes.

De préférence l'alimentation des piles 3 en combustible est réalisée par équilibrage de pression à partir de la première 4 ou de la seconde 5 réserve.

Le détendeur 19 aval est conformé pour détendre le gaz à une troisième pression P3 de détente inférieure à la seconde pression P2 de détente (par exemple 1 bar environ).

Du fait des différences de pression entre la première P1 et la seconde pression P2 de détente et de la présence du clapet anti-retour 26, lorsque la pression de combustible dans la première réserve 4 est supérieure à la première pression P1 de détente, la pile 3 est alimentée par défaut à partir de la première 4 réserve. C'est-à-dire que le gaz à la première pression P1 de détente circule prioritairement dans la ligne 11, 15 d'alimentation. En revanche, lorsque la pression de combustible dans la première réserve 4 est inférieure à la première pression P1 de détente, le gaz ne passe pas en aval du premier détendeur 12 laissant la possibilité au gaz issu de la seconde réserve de circuler dans la ligne 13, 15 d'alimentation vers les piles 3.

On conçoit donc aisément que l'invention, tout en étant de structure simple et peu coûteuse, permet une meilleure gestion de l'alimentation en combustible d'une installation.

L'installation est en particulier plus avantageuse qu'une installation qui comporterait deux réserves associées à une centrale d'inversion à haute pression pour commuter l'alimentation à partir d'une réserve à l'autre. L'emploi d'une centrale d'inversion haute pression de ce type, qui est particulièrement coûteuse, peut être évité dans l'installation selon l'invention.

De plus, dans une telle configuration avec centrale d'inversion haute pression, il serait nécessaire de mesurer la pression dans les deux réserves pour en déduire l'autonomie restante en combustible.

Selon l'invention, une seule une mesure de pression 10 dans la seconde réserve est nécessaire (la mesure de pression au niveau de la première réserve n'est pas nécessaire). Cette seule mesure 10 peut reliée à un système intelligent de télétransmission de données 7, 17 pour surveiller l'autonomie restante de l'installation. Ceci permet de connaître de façon fiable et peu coûteuse le moment
où la première réserve 4 est vide et doit être remplacée par une réserve pleine. L'installation selon l'invention permet également de signaler toute anomalie de consommation (fuite notamment). En effet, dès que la seconde réserve 5 alimente la pile, (indiqué par l'information du capteur 10 de pression de la seconde réserve), cela indique que la première réserve 4 « fait défaut ».

L'invention peut s'appliquer à tout autre type d'installation consommatrice d'énergie.

## Revendications

1. Installation fonctionnelle consommatrice d'énergie électrique, utilisant une pile à combustible et comprenant un organe (2) consommateur d'énergie électrique, une pile à combustible (3) reliée à l'organe (4) consommateur pour alimenter ce dernier en énergie électrique, la pile à combustible (3) étant du type à combustible gazeux, notamment de l'hydrogène gazeux, une première réserve (4) de combustible gazeux stocké sous pression destinée à alimenter la pile (3) par défaut, **caractérisée en ce qu'**elle comporte une seconde réserve (5) de combustible gazeux stocké sous pression pour la pile (3), des moyens (6) de distribution sélective de combustible à la pile à partir de la première (4) ou de la seconde réserve (5), les moyens (6) de distribution étant sensibles à un défaut d'alimentation ou à une alimentation insuffisante à partir de la première réserve (4) et des moyens de commutation automatique la distribution de combustible à partir de la seconde réserve (5) lors d'une telle alimentation insuffisante ou défectueuse de la première réserve (4) et **en ce que** la première réserve (4) de combustible gazeux est reliée à la pile au moyen d'une première ligne (11) d'alimentation comprenant des premiers moyens (12) de régulation de pression et/ou de détente à une première pression (P1) de détente, la seconde réserve (5) de combustible gazeux est reliée à la pile (3) au moyen d'une seconde ligne (13) d'alimentation comprenant des seconds (14) moyens de régulation de pression et/ou de détente à une seconde pression (P2), distincte de la première pression (P1).

2. Installation selon la revendication 1, **caractérisée en ce que** l'alimentation de la pile à combustible est réalisée par équilibrage de pression.

3. Installation selon la revendication 1 ou 2, **caractérisée en ce que** la première ligne (11) d'alimentation comprend un élément anti-retour (26) tel qu'un clapet empêchant le transit de combustible de la seconde réserve vers la première réserve.

4. Installation selon la revendication 3, **caractérisée en ce que** les première (11) et seconde (13) lignes d'alimentation comportent des portions amont distinctes reliées respectivement à la première (4) et à la seconde (5) réserve et se rejoignent en une portion (15) commune aval reliée à la pile (3), la première pression (P1) de détente étant supérieure à la seconde pression (P2) de détente.

5. Installation selon la revendication 4, **caractérisée en ce que** la portion commune aval comporte des troisièmes moyens de régulation de pression et/ou de détente à une troisième pression de détente.

6. Installation selon l'une quelconque des revendications 1 à 5 **caractérisée en ce qu'**elle comporte des moyens de détection d'une alimentation insuffisante en combustible de la première réserve (4).

7. Installation selon l'une quelconque des revendications 1 à 6, **caractérisée en ce que** l'organe (2) consommateur, la pile à combustible (3) et la seconde réserve (5) sont disposés dans un même contenant (9) ou de façon adjacente dans une première zone.

8. Installation selon la revendication 7, **caractérisée en ce que** la première réserve (4) est éloignée à l'ensemble comprenant l'organe (4) consommateur, la pile à combustible (3) et la seconde réserve (5).

9. Installation selon l'une quelconque des revendications précédentes, **caractérisée en ce qu'**elle comprend des moyens (8) de mesure ou d'estimation de la quantité de combustible gazeux consommé en temps réel par la pile (3), des moyens (7) de traitement de données recevant des moyens (8) de mesure ou d'estimation la quantité combustible consommé en temps réel par la pile (3) et conformés pour calculer le moment d'un seuil de combustible insuffisant dans la première réserve (4), les moyens (7) de traitement de données étant reliés aux moyens (6) de distribution pour commander la commutation de la distribution de combustible de la première réserve (4) à la seconde réserve (5) lors lorsque le seuil de combustible est ou devient insuffisant dans la première réserve (4).

10. Installation selon la revendication 9, **caractérisée en ce que** les moyens (7) de traitement de données comportent des moyens de stockage et de transmission (17) de données apte à communiquer avec un système de surveillance d'un ensemble d'installations.

11. Installation selon l'une quelconque des revendications précédentes, **caractérisée en ce qu'**elle comporte des moyens (10) de détermination et/ou de saisie de la quantité initiale de combustible dans la première réserve (4).

12. Installation selon l'une quelconque des revendications précédentes, **caractérisée en ce qu'**elle comporte des moyens (10) de détection de débit et/ou de pression à la sortie de la seconde réserve (5).

13. Installation selon la revendication 12, **caractérisée en ce que** les moyens (10) de détection d'une alimentation insuffisante en combustible de la première réserve (4) comporte ou sont constitués uniquement des moyens (10) de détection de débit et/ou de pression à la sortie de la seconde réserve.

14. Procédé pour alimenter en énergie électrique une installation fonctionnelle consommatrice d'énergie électrique utilisant une pile à combustible, comprenant un organe (2) consommateur d'énergie électrique, une pile à combustible (3) reliée à l'organe consommateur pour alimenter ce dernier en énergie électrique, la pile à combustible (3) étant du type à combustible gazeux, notamment de l'hydrogène gazeux, une première (4) et une seconde réserve (5) de combustible gazeux aptes à alimenter la pile (3), le procédé comportant :
- une étape consistant à alimenter par défaut la pile (3) à partir de la première réserve (4),
- une étape de détection ou de détermination d'une alimentation en combustible insuffisante ou défectueuse à partir de la première réserve (4),
- une étape de commutation de l'alimentation en combustible à partir de la seconde réserve (5) lorsque l'alimentation en combustible à partir de la première réserve (4) est susceptible d'être insuffisante ou est défectueuse, **caractérisé en ce que** l'étape de détection ou de détermination d'une alimentation en combustible insuffisante ou défectueuse à partir de la première réserve (4) consiste à détecter uniquement une alimentation en gaz à partir de la seconde réserve par une mesure de pression et/ou de débit dans et/ou à la sortie de la seconde réserve (5).

15. Procédé selon la revendication précédente, **caractérisé en ce qu'**il comporte une étape de détermination de la quantité initiale de combustible dans la première réserve (4), une étape de mesure ou d'estimation de la quantité de combustible consommée en temps réel par la pile (3), et une étape de détermination d'un seuil de combustible insuffisant atteint dans la première réserve (4) en fonction de la quantité initiale de combustible et de la quantité de combustible consommée en temps réel.

16. Procédé selon l'une quelconque des revendications 14 ou 15, **caractérisé en ce que** l'étape de détection ou de détermination d'une alimentation en combustible insuffisante ou défectueuse comporte une détection d'un débit à la sortie de la seconde réserve (5).

## Claims

1. Functional installation consuming electric power, using a fuel cell and comprising an electric power consuming member (2), a fuel cell (3) connected to the consuming member (4) to supply the latter with electric power, the fuel cell (3) being of the type using a gaseous fuel, in particular hydrogen gas, a first reserve (4) of gaseous fuel stored under pressure for supplying the cell (3) by default, **characterized in that** it comprises a second reserve (5) of gaseous fuel stored under pressure for the cell (3), means (6) for selectively delivering fuel to the cell from the first (4) or the second reserve (5), the delivery means (6) being capable of detecting a supply fault or an insufficient supply from the first reserve (4) and means for automatically switching the fuel delivery to the second reserve (5) in the event of such an insufficient or faulty supply from the first reserve (4), and **in that** the first gaseous fuel reserve (4) is connected to the cell by means of a first supply line (11) comprising first means (12) for regulating the pressure and/or expanding the gas to a first relief pressure (P1), the second gaseous fuel reserve (5) is connected to the cell (3) by means of a second supply line (13) comprising second means (14) for regulating the pressure and/or expanding the gas to a second pressure (P2), which is different from the first pressure (P1).

2. Installation according to Claim 1,
**characterized in that** the fuel cell is supplied by pressure equalization.

3. Installation according to either of Claims 1 and 2, **characterized in that** the first supply line (11) comprises a non-return element (26) such as a check valve preventing the passage of fuel from the second reserve to the first reserve.

4. Installation according to Claim 3,
**characterized in that** the first (11) and second (13) supply lines comprise different upstream portions connected respectively to the first (4) and the second (5) reserve and meeting at a common downstream portion (15) connected to the cell (3), the first relief pressure (P1) being higher than the second relief pressure (P2).

5. Installation according to Claim 4,
**characterized in that** the common downstream portion comprises third means for regulating the pressure and/or expanding the gas to a third relief pressure.

6. Installation according to any one of Claims 1 to 5, **characterized in that** it comprises means for detecting an insufficient supply of fuel from the first reserve (4).

7. Installation according to any one of Claims 1 to 6, **characterized in that** the consuming member (2), the fuel cell (3) and the second reserve (5) are placed in the same container (9) or adjacent to one another in a first zone.

8. Installation according to Claim 7,
**characterized in that** the first reserve (4) is distant with respect to the combination comprising the consuming member (4), the fuel cell (3) and the second reserve (5).

9. Installation according to any one of the preceding claims, **characterized in that** it comprises means (8) for measuring or estimating the quantity of gaseous fuel consumed in real time by the cell (3), data processing means (7) accommodating means (8) for measuring or estimating the quantity of fuel consumed in real time by the cell (3) and conformed to calculate the moment of an insufficient fuel threshold in the first reserve (4), the data processing means (7) being connected to the delivery means (6) for controlling the switching of the fuel delivery from the first reserve (4) to the second reserve (5) in the event that the fuel threshold is or becomes insufficient in the first reserve (4).

10. Installation according to Claim 9,
**characterized in that** the data processing means (7) comprise data storage and transmission means (17) suitable for communicating with a system for monitoring a group of installations.

11. Installation according to any one of the preceding claims, **characterized in that** it comprises means (10) for determining and/or acquiring the initial quantity of fuel in the first reserve (4).

12. Installation according to any one of the preceding claims, **characterized in that** it comprises flow and/or pressure detecting means (10) at the outlet of the second reserve (5).

13. Installation according to Claim 12,
**characterized in that** the means (10) for detecting an insufficient fuel supply from the first reserve (4) comprise or consist exclusively of the flow and/or pressure detecting means (10) at the outlet of the second reserve.

14. Method for supplying electric power to a functional installation consuming electric power, using a fuel cell, comprising an electric power consuming member (2), a fuel cell (3) connected to the consuming member to supply the latter with electric power, the fuel cell (3) being of the type using a gaseous fuel, in particular hydrogen gas, a first (4) and second reserve (5) of gaseous fuel suitable for supplying the cell (3), the method comprising:
- a step consisting in supplying the cell (3) by default from the first reserve (4),
- a step of detecting or determining an insufficient or faulty fuel supply from the first reserve (4),
- a step of switching the fuel supply to the second reserve (5) when the fuel supply from the first reserve (4) is liable to be insufficient or is faulty, **characterized in that** the step for detecting or determining an insufficient or faulty fuel supply from the first reserve (4) consists in exclusively detecting a gas supply from the second reserve by a pressure and/or flow measurement in and/or at the outlet of the second reserve (5).

15. Method according to the preceding claim, **characterized in that** it comprises a step of determining the initial quantity of fuel in the first reserve (4), a step of measuring or estimating the quantity of fuel consumed in real time by the cell (3), and a step of determining an insufficient fuel threshold reached in the first reserve (4) according to the initial quantity of fuel and to the quantity of fuel consumed in real time.

16. Method according to either of Claims 14 and 15, **characterized in that** the step of detecting or determining an insufficient or faulty fuel supply comprises a flow detection at the outlet of the second reserve (5).

## Patentansprüche

1. Elektrische Energie verbrauchende funktionelle Anlage, die eine Brennstoffzelle verwendet und ein elektrische Energie verbrauchendes Organ (2), eine Brennstoffzelle (3), die mit dem Verbraucherorgan (2) verbunden ist, um dieses mit elektrischer Energie zu versorgen, wobei die Brennstoffzelle (3) vom Typ mit gasförmigem Brennstoff, insbesondere gasförmigem Wasserstoff, ist, und einen ersten Vorrat (4) von unter Druck gespeichertem gasförmigem Brennstoff enthält, der dazu bestimmt ist, standardmäßig die Zelle (3) zu versorgen, **dadurch gekennzeichnet, dass** sie einen zweiten Vorrat (5) von unter Druck gespeichertem gasförmigem Brennstoff für die Zelle (3), Einrichtungen (6) zur selektiven Ausgabe von Brennstoff an die Zelle ausgehend vom ersten (4) oder vom zweiten Vorrat (5), wobei die Ausgabeeinrichtungen (6) auf einen Versorgungsfehler oder auf eine unzureichende Versorgung ausgehend vom ersten Vorrat (4) ansprechen, und Einrichtungen zum automatischen Umschalten der Ausgabe von Brennstoff ausgehend vom zweiten Vorrat (5) bei einer solchen unzureichenden oder fehlerhaften Versorgung vom ersten Vorrat (4) aufweist, und dass der erste Vorrat (4) von gasförmigem Brennstoff mittels einer ersten Versorgungsleitung (11) mit der Zelle verbunden ist, die erste Einrichtungen (12) zur Regelung des Drucks und/oder der Entspannung auf einen ersten Entspannungsdruck (P1) aufweist, der zweite Vorrat (5) von gasförmigem Brennstoff mittels einer zweiten Versorgungsleitung (13) mit der Zelle (3) verbunden ist, die zweite Einrichtungen (14) zur Regelung des Drucks und/oder der Entspannung auf einen zweiten Druck (P2) aufweist, der sich vom ersten Druck (P1) unterscheidet.

2. Anlage nach Anspruch 1, **dadurch gekennzeichnet, dass** die Versorgung der Brennstoffzelle durch Druckausgleich durchgeführt wird.

3. Anlage nach Anspruch 1 oder 2, **dadurch gekennzeichnet, dass** die erste Versorgungsleitung (11) ein Rückschlagelement (26) wie ein Ventil aufweist, das den Übergang von Brennstoff vom zweiten Vorrat zum ersten Vorrat verhindert.

4. Anlage nach Anspruch 3, **dadurch gekennzeichnet, dass** die erste (11) und die zweite (13) Versorgungsleitung unterschiedliche vorne liegende Abschnitte aufweisen, die mit dem ersten (4) bzw. dem zweiten Vorrat (5) verbunden sind und sich in einem gemeinsamen hinten liegenden Abschnitt (15) vereinen, der mit der Zelle (3) verbunden ist, wobei der erste Entspannungsdruck (P1) höher ist als der zweite Entspannungsdruck (P2).

5. Anlage nach Anspruch 4, **dadurch gekennzeichnet, dass** der gemeinsame hinten liegende Abschnitt dritte Einrichtungen zur Regelung des Drucks und/oder der Entspannung auf einen dritten Entspannungsdruck aufweist.

6. Anlage nach einem der Ansprüche 1 bis 5, **dadurch gekennzeichnet, dass** sie Einrichtungen zur Erfassung einer unzureichenden Versorgung des ersten Vorrats (4) mit Brennstoff aufweist.

7. Anlage nach einem der Ansprüche 1 bis 6, **dadurch gekennzeichnet, dass** das Verbraucherorgan (2), die Brennstoffzelle (3) und der zweite Vorrat (5) im gleichen Behälter (9) oder in einer ersten Zone benachbart angeordnet sind.

8. Anlage nach Anspruch 7, **dadurch gekennzeichnet, dass** der erste Vorrat (4) von der Einheit entfernt ist, die das Verbraucherorgan (2), die Brennstoffzelle (3) und den zweiten Vorrat (5) enthält.

9. Anlage nach einem der vorhergehenden Ansprüche,
**dadurch gekennzeichnet, dass** sie Mess- oder Schätzeinrichtungen (8) der Menge von in Echtzeit von der Zelle (3) verbrauchtem gasförmigem Brennstoff und Datenverarbeitungseinrichtungen (7) enthält, die von den Mess- oder Schätzeinrichtungen (8) die von der Zelle (3) in Echtzeit verbrauchte Menge von gasförmigem Brennstoff empfangen und ausgebildet sind, um den Zeitpunkt einer unzureichenden Brennstoffschwelle im ersten Vorrat (4) zu berechnen, wobei die Datenverarbeitungseinrichtungen (7) mit den Ausgabeeinrichtungen (6) verbunden sind, um das Umschalten der Ausgabe von Brennstoff vom ersten Vorrat (4) zum zweiten Vorrat (5) zu steuern, wenn die Brennstoffschwelle im ersten Vorrat (4) unzureichend ist oder wird.

10. Anlage nach Anspruch 9, **dadurch gekennzeichnet, dass** die Datenverarbeitungseinrichtungen (7) Einrichtungen zur Speicherung und zur Übertragung (17) von Daten aufweisen, die mit einem Überwachungssystem eine Gruppe von Anlagen kommunizieren können.

11. Anlage nach einem der vorhergehenden Ansprüche,
**dadurch gekennzeichnet, dass** sie Einrichtungen (10) zur Bestimmung und/oder zur Erfassung der Anfangsbrennstoffmenge im ersten Vorrat (4) aufweist.

12. Anlage nach einem der vorhergehenden Ansprüche,
**dadurch gekennzeichnet, dass** sie Einrichtungen (10) zur Erfassung des Durchsatzes und/oder des Drucks am Ausgang des zweiten Vorrats (5) aufweist.

13. Anlage nach Anspruch 12, **dadurch gekennzeichnet, dass** die Einrichtungen (10) zur Erfassung einer unzureichenden Brennstoffversorgung des ersten Vorrats (4) nur Einrichtungen (10) zur Erfassung des Durchsatzes und/oder des Drucks am Ausgang des zweiten Vorrats aufweisen oder daraus bestehen.

14. Verfahren zur Versorgung einer elektrische Energie verbrauchenden funktionellen Anlage mit elektrischer Energie unter Verwendung einer Brennstoffzelle, die ein elektrische Energie verbrauchendes Organ (2), eine mit dem Verbraucherorgan verbundene Brennstoffzelle (3), um dieses mit elektrischer Energie zu versorgen, wobei die Brennstoffzelle (3) vom Typ mit gasförmigem Brennstoff, insbesondere gasförmigem Wasserstoff, ist, einen ersten (4) und einen zweiten Vorrat (5) von gasförmigem Brennstoff enthält, die die Zelle (3) versorgen können, wobei das Verfahren aufweist:
- einen Schritt, der darin besteht, standardmäßig die Zelle (3) ausgehend vom ersten Vorrat (4) zu versorgen,
- einen Schritt der Erfassung oder der Bestimmung einer unzureichenden oder fehlerhaften Brennstoffversorgung ausgehend vom ersten Vorrat (4),
- einen Schritt des Umschaltens der Brennstoffversorgung ausgehend vom zweiten Vorrat (5), wenn die Brennstoffversorgung ausgehend vom ersten Vorrat (4) möglicherweise unzureichend oder fehlerhaft ist,
**dadurch gekennzeichnet, dass** der Schritt der Erfassung oder der Bestimmung einer unzureichenden oder fehlerhaften Brennstoffversorgung ausgehend vom ersten Vorrat (4) darin besteht, nur eine Gasversorgung ausgehend vom zweiten Vorrat durch eine Messung des Drucks und/oder des Durchsatzes in dem und/oder am Ausgang des zweiten Vorrats (5) zu erfassen.

15. Verfahren nach dem vorhergehenden Anspruch,
**dadurch gekennzeichnet, dass** es einen Schritt der Bestimmung der Anfangsmenge von Brennstoff im ersten Vorrat (4), einen Schritt der Messung oder der Schätzung der in Echtzeit von der Zelle (3) verbrauchten Brennstoffmenge und einen Schritt der Bestimmung einer unzureichenden Brennstoffschwelle aufweist, die im ersten Vorrat (4) erreicht wird, in Abhängigkeit von der Anfangsbrennstoffmenge und der in Echtzeit verbrauchten Brennstoffmenge.

16. Verfahren nach einem der Ansprüche 14 oder 15,
**dadurch gekennzeichnet, dass** der Schritt der Erfassung oder der Bestimmung einer unzureichenden oder fehlerhaften Brennstoffversorgung eine Erfassung eines Durchsatzes am Ausgang des zweiten Vorrats (5) aufweist.
